# FASCICULE DE BREVET EUROPEEN

(11) **EP 3 256 339 B1**
(45) Date de publication et mention de la délivrance du brevet: **11.09.2019**
(21) Numéro de dépôt: 16707902.9
(22) Date de dépôt: 11.02.2016
(51) Int. Cl.: B60J 10/00, B60J 1/02, B60J 10/70, B60J 10/35

(54) **VITRAGE COMPRENANT UN CORDON PROFILE DE CLIPPAGE AVEC TROU.**
VERGLASUNG MIT PROFILIERTEM KLEMMBEFESTIGUNGSWULST MIT LOCH
GLAZING COMPRISING A PROFILED CLIP-FASTENING BEAD WITH HOLE

(30) Priorité: 13.02.2015 FR 1551205
(43) Date de publication de la demande: 20.12.2017
(73) Titulaire: Saint-Gobain Glass France, 92400 Courbevoie (FR)
(72) Inventeur: DALMASSO, Giovanni, 12100 Cuneo (IT); TROMBETTA, Nicola, 12038 Savigliano (CN) (IT)
(74) Mandataire: Saint-Gobain Recherche
(86) Numéro de dépôt international: PCT/FR2016/050314
(87) Numéro de publication internationale: WO 2016/128683

(56) Documents cités:
- WO-A1-01/85481
- WO-A1-2009/112545
- CN-A- 102 785 621

## Description

La présente invention concerne un vitrage de véhicule, et notamment un pare-brise, comprenant un élément vitré présentant une face extérieure, un chant et une face intérieure.

La présente invention concerne plus particulièrement un vitrage de véhicule qui comporte le long d'au moins une partie d'au moins un bord bas un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Il est connu en effet pour assurer le positionnement et/ou la fixation d'une pièce de couverture sur un élément vitré, d'utiliser un tel cordon profilé comportant une rainure.

Ce cordon profilé est généralement fixé à la face intérieure de l'élément vitré à l'aide d'une aile intérieure qui est collée contre cette face intérieure, le long d'au moins une partie du bord bas du vitrage.

Pour une bonne adhésion de cette aile intérieure à l'élément vitré qui autorise un clippage en force dans la rainure, cette aile intérieure doit être relativement large (lorsque le cordon profilé est observé en coupe transversale, comme c'est le cas dans la majorité des documents de l'art antérieur).

L'art antérieur connaît deux types de situations :
- lorsque la pièce de couverture vient couvrir au moins la rainure en dépassant au-dessus de la face extérieure de l'élément vitré, comme par exemple dans les demandes de brevets EP 945 296, DE 3606566 ou CN 102785621 ; et
- lorsque la pièce de couverture vient couvrir au moins la rainure sans dépasser au-dessus de la face extérieure de l'élément vitré, comme par exemple dans les demandes de brevets WO 2001/045974 ou WO 2001/85481.

Dans la première situation, la pièce de couverture doit être suffisamment large, pour couvrir au moins l'aile intérieure afin qu'elle ne soit pas visible de l'extérieur et/ou une bande de masquage est réalisée plus à l'extérieure que l'aile intérieure.

Dans la seconde situation, une bande de masquage est réalisée plus à l'extérieure que l'aile intérieure pour couvrir au moins l'aile intérieure afin qu'elle ne soit pas visible de l'extérieur.

Ces deux situations ont en commun que lorsque le cordon profilé, qui est préfabriqué, est appliqué contre le bord bas intérieur du vitrage pour être collé à ce dernier, il peut être difficile de faire coïncider la forme du cordon profilé, relativement rigide, avec le bord bas du vitrage.

Ceci est d'autant plus difficile lorsque le chant de ce bord bas du vitrage présente à certains endroits un rayon de courbure relativement petit.

Une difficulté supplémentaire vient du fait que, malgré toutes les précautions prises lors de la fabrication des éléments vitrés en série, la dispersion de dimensions d'un élément vitré à l'autre d'une même série (le fait que les éléments vitrés n'ont pas tous exactement les mêmes dimensions) peut être relativement grande alors que la dispersion de dimensions du cordon profilé est relativement faible.

Ceci est particulièrement le cas lorsque les éléments vitrés sont des éléments vitrés feuilletés ; les pare-brise comportent nécessairement des éléments vitrés feuilletés.

En outre, lorsque le chant du bord bas d'un vitrage présente à certains endroits un rayon de courbure relativement petit cela signifie qu'il y a des parties de ce bord bas qui sont en retour vers le haut, c'est-à-dire plus hautes que le point le plus bas de ce bord bas.

Dans ce cas, il peut être nécessaire de vouloir prévoir des moyens pour évacuer l'eau qui peut pénétrer entre le chant de l'élément vitré et la rainure du cordon profilé adjacent et qui peut stagner dans une ou des parties basses du bord bas qui sont situées entre deux parties hautes du bord bas.

La présente invention a pour but de remédier à ces inconvénients en proposant un vitrage comportant un cordon profilé qui permet en clippage en force, et donc qui est solidement attaché à l'élément vitré, tout en permettant de s'adapter plus facilement au bord bas de l'élément vitré et tout en permettant d'évacuer plus facilement de l'eau éventuellement présente.

La présente invention se rapporte ainsi à un vitrage de véhicule, et notamment un vitrage feuilleté, selon la revendication 1. Ce vitrage comprend un élément vitré, éventuellement feuilleté et comprenant alors une feuille de verre extérieure, une feuille de verre intérieure et une feuille intercalaire de matière plastique située entre lesdites deux feuilles de verre, (directement au contact ou avec interposition d'une autre feuille de matière plastique).

Cet élément vitré présente une face extérieure qui est orientée vers l'extérieur dudit véhicule, une face intérieure qui est orientée vers l'intérieur dudit véhicule et un chant qui est situé entre ces deux faces.

Ledit vitrage comporte le long d'au moins une partie d'au moins un bord bas un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Ledit cordon profilé est situé contre ledit chant dudit élément vitré et comporte, vu en coupe transversale, une aile intérieure située en dessous (directement sous, ou indirectement sous et avec insertion d'une bande d'adhésion formée par une couche de colle ou un ruban adhésif) de ladite face intérieure dudit élément vitré. Ledit cordon profilé comporte, de préférence, une seule aile intérieure.

Par l'expression « le cordon profilé est situé contre ledit chant dudit élément vitré », il faut comprendre que, vu en coupe transversale, au moins une partie du cordon profilé est au contact d'au moins une partie du chant de l'élément vitré, tout en sachant que ce chant de l'élément vitré peut être en plusieurs partie sur sa hauteur, notamment lorsque l'élément vitré est un élément vitré feuilleté composé de plusieurs feuilles de matière.

Ce vitrage est remarquable en ce que ladite aile intérieure comporte au moins dans une partie basse dudit cordon profilé, au moins un trou traversant ladite aile intérieure, ledit trou présentant de préférence une longueur comprise entre 2,0 et 50,0 mm et une largeur comprise entre 2,0 et 10,0 mm.

Dans le présent document, lorsqu'il est fait référence au positionnement haut/bas, c'est en référence à la position du vitrage dans la baie qu'il est destiné à fermer.

D'une manière complètement surprenante, il a ainsi été découvert qu'il était possible de réaliser au moins un trou dans l'aile intérieure du cordon profilé afin de lui donner un souplesse d'adaptation et que lorsque ce trou était positionné en partie basse du cordon profilé, c'est-à-dire dans une région d'un creux bas du cordon profilé lorsque celui-ci est observé selon sa longueur, cela permettait de modifier légèrement l'incurvation du cordon profilé et facilitait alors son adaptation au bord bas de l'élément vitré, même si celui-ci ne présentait pas exactement les dimensions voulues.

Le trou selon l'invention n'est pas un trou de fixation pour la fixation du vitrage ; le trou selon l'invention est vide de matière solide.

En outre, ce trou permet alors l'évacuation de l'eau qui peut sinon éventuellement stagner à cet endroit et être une source de salissure et qui peut endommager la cohésion de l'élément vitré si c'est un élément vitré feuilleté (en particulier pour l'eau de lavage du vitrage).

Ladite bande d'adhésion permet la fixation définitive du cordon profilé à l'élément vitré après ajustement éventuel de sa position vis-à-vis de l'élément vitré, grâce à la présence du (ou des) trou(s).

De préférence, le trou (ou chaque trou) présente une section rectangulaire avec une longueur comprise entre 10,0 et 20,0 mm et une largeur comprise entre 2,0 et 6,0 mm.

Lorsque ledit vitrage comporte une seule partie basse, ledit vitrage comporte un trou unique centré en longueur sur un point le plus bas dudit cordon profilé.

Lorsque ledit vitrage comporte deux parties basses, ledit vitrage comporte deux trous centrés chacun en longueur sur un point le plus bas dudit cordon profilé.

Ladite aile intérieure est, de préférence, venue de matière avec ladite rainure ; elle est située dans le prolongement intérieur du bas de ladite rainure, à l'extérieur de la rainure.

Ledit trou est situé à l'aplomb de ladite rainure, en dehors de celle-ci, c'est-à-dire à l'aplomb du chant de l'élément vitré. Le fond de la rainure est continu ; il ne comporte pas de trou ; ledit trou ne débouche donc pas dans ladite rainure.

Dans une variante, ladite aile intérieure comporte un tenon qui comporte lui-même un trou.

De préférence, ledit trou dudit cordon profilé vu en coupe transversale est situé entre ladite rainure et une bande d'adhésion qui est située sur ladite aile intérieure.

Vu en coupe transversale, ladite face extérieure dudit élément vitré est de préférence libre en vis-à-vis de ladite rainure, et dans un premier mode de réalisation ladite rainure est de préférence affleurante dans la continuité de ladite face extérieure.

La pièce de couverture est une pièce destinée à être positionnée plus à l'extérieur que le cordon profilé, au moins en partie au-dessus de la rainure du cordon profilé.

La présente invention se rapporte par ailleurs à un cordon profilé pour un vitrage, selon la revendication 8.

Avantageusement, la présente invention permet de proposer un vitrage à cordon profilé de clippage qui est fiable, avec un élément (au moins un trou) qui permet d'ajuster la position relative du cordon profilé vis-à-vis de l'élément vitré et permet en outre l'évacuation de l'eau qui pourrait stagner entre la rainure de clippage et le chant de l'élément vitré.

La présente invention permet ainsi de réaliser un système de clippage compacte, tout en étant fiable.

Le vitrage selon l'invention est, de préférence, un vitrage fixe (non mobile lorsque positionné dans la baie qu'il doit fermer).

On décrira ci-après, à titre d'exemple non limitatif, plusieurs formes d'exécution de la présente invention, en référence au dessin annexé sur lequel :
- la figure 1 est une vue de face (extérieure) d'un vitrage de véhicule selon l'invention comportant en partie basse un cordon profilé dont l'aile intérieure présente un trou centré longitudinalement selon l'axe central vertical Y₀ ;
- la figure 2 est une vue de face (extérieure) d'un autre vitrage de véhicule selon l'invention comportant en partie basse un cordon profilé dont l'aile intérieure présente deux trous centrés longitudinalement chacun dans la partie la plus basse, selon un axe vertical A ;
- la figure 3 est une vue partielle en coupe transversale selon l'axe Y₀ ou A respectivement des figures 1 et 2, d'un premier mode de réalisation du cordon profilé, la pièce de couverture étant positionnée dans le prolongement de la face extérieure de l'élément vitré ; et
- la figure 4 est une vue partielle en coupe transversale selon l'axe Y₀ ou A respectivement des figures 1 et 2, d'un second mode de réalisation du cordon profilé, la pièce de couverture étant positionnée débordant au-dessus de la face extérieure de l'élément vitré.

A l'intérieur de chaque figure les éléments en arrière plan ne sont en général pas représentés, afin de faciliter leur lecture.

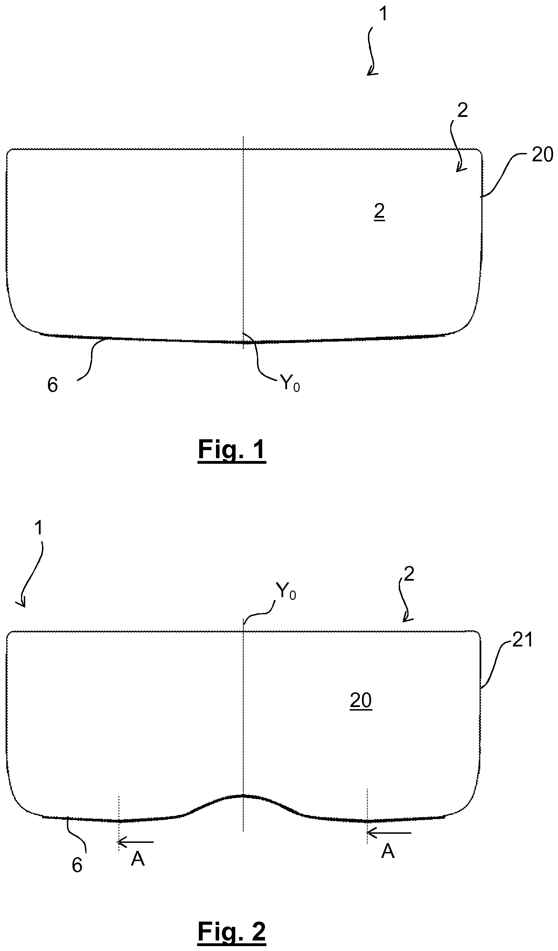

La présente invention se rapporte à un vitrage 1 de véhicule, fixe, tel que visible en figure 1 ou 2, comprenant un élément vitré 2.

Comme ce vitrage est un vitrage de véhicule, ce vitrage réalise une séparation entre un espace extérieur E qui est extérieur au véhicule et un espace intérieur I qui est intérieur au véhicule. Les notions de « extérieur » et « intérieur » sont donc considérées par rapport respectivement à cet espace extérieur E et cet espace intérieur I.

En figures 1 et 2, le vitrage est vu de l'extérieur, orienté verticalement comme sur un véhicule.

Le vitrage 1 est destiné à fermer une baie qui est ménagée dans une carrosserie du véhicule.

Dans le cadre du présent document, la notion de « centripète » et celle de « centrifuge » est à considérer par rapport à l'axe longitudinal central d'avancé du véhicule équipé du vitrage selon l'invention en tant que pare-brise, c'est-à-dire l'axe généralement appelé « l'axe X-X' » du véhicule, qui est perpendiculaire au plan de la feuille des figures 1 et 2 ; le sens centrifuge est perpendiculaire à cet axe et en direction de cet axe alors que le sens centripète est perpendiculaire à cet axe et à l'opposé, en s'éloignant de cet axe.

En figure 1, le bord bas de l'élément vitré comporte un seule partie basse et un point le plus bas, unique, centré en longueur du vitrage (c'est-à-dire largeur du véhicule) sur un axe vertical central Y₀.

En figure 2, le bord bas de l'élément vitré comporte deux parties basses distinctes, séparées par une partie haute centrale qui est sur un axe vertical central Y₀ qui est lui-même centré en longueur du vitrage (c'est-à-dire largeur du véhicule). Les deux parties basses sont disposées symétriquement de part et d'autre de cet axe Y₀.

Chaque partie basse est centrée en longueur par rapport à un axe vertical A.

La présente invention est décrite en particulier en étant appliquée à un pare-brise de véhicule et plus précisément dans le cadre d'une application à un bord inférieur d'un pare-brise de véhicule.

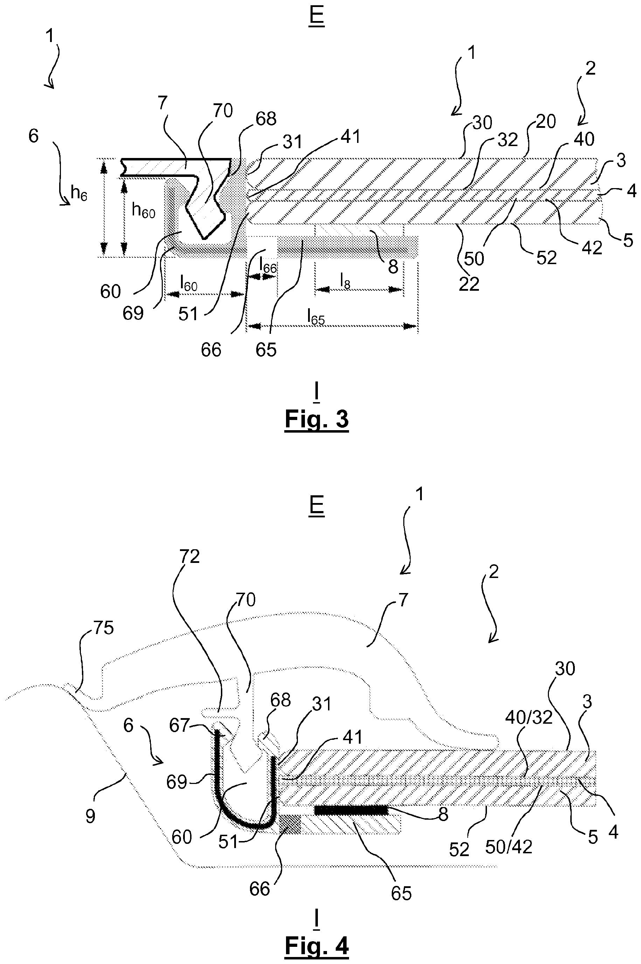

Ainsi, l'élément vitré 2 est un élément vitré feuilleté qui comprend, comme visible sur les vues en coupe transversales des figures 3 et 4, une feuille de verre extérieure 3, une feuille de verre intérieure 5 et une feuille intercalaire de matière plastique 4 située entre lesdites deux feuilles de verre.

L'élément vitré 2 du vitrage 1 est un vitrage feuilleté qui comporte, de l'extérieur vers l'intérieur, au moins : la feuille de verre extérieure 3, la feuille intercalaire de matière plastique 4 et la feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

La feuille de verre extérieure 3 présente une face extérieure 30 qui est orientée vers l'extérieur E, une face intercalaire 32 qui est orientée vers la feuille intercalaire de matière plastique 4, et un chant 31 situé entre ces deux faces.

La feuille de verre intérieure 5 présente une face intercalaire 50 qui est orientée vers la feuille intercalaire de matière plastique 4, une face intérieure 52 qui est orientée vers l'intérieur I et un chant 51 situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 qui est situé entre ces deux faces intercalaires 32, 42.

L'élément vitré 2 présente ainsi une face extérieure 20 réalisée par la face extérieure 30 de la feuille de verre extérieure 3, une face intérieure 22 réalisée par la face intérieure 52 de la feuille de verre intérieure 5 et un chant 21 situé entre ces deux faces, correspondant au chant 31 de la feuille de verre extérieure 3, au chant 41 de la feuille de matière plastique 4 et au chant 51 de la feuille de verre intérieure 5, ces trois chants étant ici dans la continuité l'un de l'autre.

Le vitrage 1 comporte, outre l'élément vitré 2, le long d'au moins une partie d'au moins un bord bas un cordon profilé 6 comportant une rainure 60 pour le clippage d'une pièce de couverture 7 sur ledit cordon profilé 6, ladite pièce de couverture 7 comportant, vue en coupe transversale, un harpon 70 pénétrant dans ladite rainure 60 lors du clippage.

La rainure 60 présente une embouchure et un fond : lors du clippage de la pièce de couverture 7, le harpon 70 pénètre dans la rainure 60 par l'embouchure et en direction du fond ; généralement, dans la position clippée, le harpon 70 ne touche pas le fond de la rainure.

L'embouchure de la rainure, par laquelle est introduit le harpon 70, est réalisée par deux avaloirs : un avaloir centrifuge 67, situé à gauche du harpon 70 sur les figures 3 et 4 et un avaloir centripète 68, situé à droite du harpon 70 sur ces mêmes figures. Ces deux avaloirs ont pour but de guider le harpon 70 avec précision vers le fond de la rainure 60 lors du clippage du harpon 70.

La pièce de couverture 7 est destinée à être positionnée plus à l'extérieur que le cordon profilé 6 et à le couvrir au moins en partie lorsque le vitrage 1 est vu de l'extérieur E.

La rainure 60 est latérale : la rainure 60 du cordon profilé s'étend le long du bord inférieur de l'élément vitré, en vis-à-vis du chant 21 de l'élément vitré 2 contre la totalité de ce chant 21. Dans l'absolu, la rainure 60 pourrait de située en vis-à-vis d'une partie seulement du chant 21 de l'élément vitré 2, par exemple contre le chant 31 mais pas contre le chant 41 ni contre le chant 51.

L'embouchure de la rainure est orientée vers l'extérieure.

Le fond de la rainure 60 peut être situé plus à l'intérieur que la face intérieure 22 de l'élément vitré ; cela ne gêne pas le positionnement du vitrage dans la baie de la carrosserie car il y a de la place sous la face intérieure 22.

Les deux avaloirs de l'embouchure de la rainure sont chacun en forme de marteau avec les têtes presque en face l'une de l'autre, l'avaloir centrifuge 67 étant situé légèrement plus à l'extérieur que l'avaloir centripète 68.

Le harpon est double : il est constitué, vu en coupe transversale, de deux bossages orientés à l'opposé l'un de l'autre et décalé, le bossage centrifuge, destiné à venir sous l'avaloir centrifuge 67 étant situé légèrement plus à l'extérieur que le bossage centripète destiné à venir sous l'avaloir centripète 68.

Le clippage consiste ainsi en la pénétration du harpon 70 à l'intérieur de la rainure 60 et plus précisément des deux bossages du harpon à l'intérieur de la rainure 60 et sous les deux avaloirs.

Pour une retenue correcte, la largeur de l'embouchure, au plus court entre les deux avaloirs est inférieure à la largeur des deux bossages au plus large.

La matière constitutive de la rainure 60 peut être renforcée par la présence, à l'intérieur, d'un tenon 69, comme par exemple un insert métallique, qui permet d'augmenter la rigidité de la rainure. Ce tenon peut être par exemple un profilé en aluminium d'une épaisseur de 0,4 mm. Il augmente la rigidité de la rainure 60.

Le cordon profilé 6 comporte, vu en coupe transversale, une aile intérieure 65 située en dessous de ladite face intérieure 22 de l'élément vitré.

Ladite aile intérieure 65 est venue de matière avec la rainure 60 ; elle est située à proximité du fond de la rainure, en dehors de celle-ci et s'étend vers l'intérieur et vers le haut.

Selon l'invention l'aile intérieure 65 comporte au moins dans une partie basse du cordon profilé, au moins un trou 66 traversant ladite aile intérieure 65. Ce trou traverse l'aile de part en part : il débouche à la fois sur une surface extérieure de l'aile intérieure et sur une surface intérieure de l'aile intérieure.

Le trou 66 est vide de matière solide et permet l'évacuation de l'eau qui sinon stagnerait sur l'aile intérieure 65, entre la rainure 60 et le chant 21 de l'élément vitré : l'eau peut ainsi traverser l'aile intérieure et s'écouler plus bas.

Sur les figures 3 et 4, le cordon profilé 6 est illustré en coupe très exactement dans une partie basse de ce cordon profilé, là où est situé un trou 66.

Ainsi, en lien avec la figure 1, le trou 66 de l'aile intérieure est unique et est centré en longueur sur un point le plus bas de l'élément vitré, c'est-à-dire sur l'axe Y₀. C'est aussi le point le plus bas du cordon profilé.

En lien avec la figure 2, il y a deux trous 66 dans l'aile intérieure, chacun étant centré en longueur sur un point le plus bas de l'élément vitré, c'est-à-dire sur l'axe A.

Il est possible d'ajouter d'autres trous, en particulier pour favoriser l'évacuation de l'eau qui sinon stagnerait sur l'aile intérieure 65, entre la rainure 60 et le chant 21 de l'élément vitré.

Quel que soit le mode de réalisation, le trou 66 présente de préférence une longueur comprise entre 2,0 et 50,0 mm et une largeur l₆₆ comprise entre 2,0 et 10,0 mm. Ce sont les dimensions qui donnent la flexibilité optimale au cordon profilé et la capacité optimale d'évacuation de l'eau.

A titre d'exemple préférentiel, le trou 66 peut présenter une section rectangulaire avec une longueur comprise entre 10,0 et 20,0 mm, notamment de 15,0 mm et une largeur l₆₆ comprise entre 2,0 et 6,0 mm, notamment de 4,0 mm.

Le trou 66 est situé à l'aplomb de la rainure 60, en dehors de celle-ci, c'est-à-dire juste à la jonction entre l'aile intérieure 65 et la rainure 60.

Vu en coupe transversale, le trou 66 est situé entre la rainure 60 et une bande d'adhésion 8 qui est située sur ladite aile intérieure 65, pour permettre de coller l'aile intérieure, et donc le cordon profilé, à la face intérieure 22 de l'élément vitré.

Vu en coupe transversale, la face extérieure 20 de l'élément vitré 2 est, de préférence libre en vis-à-vis de ladite rainure 60.

Le cordon profilé 6 est préfabriqué : il est fabriqué par extrusion au travers d'une filière d'extrusion, puis est incurvé selon sa longueur pour se conformer avec la forme générale de la partie basse de l'élément vitré suivant sa longueur, puis percé pour former le trou 66, ou chaque trou 66.

L'élément vitré 2 est fabriqué avant la fixation du cordon profilé 6 à l'élément vitré 2, c'est-à-dire que le feuilletage des feuilles de verre 3, 5 avec la feuille de matière plastique afin de former un vitrage feuilleté est opéré avant la fixation du cordon profilé 6 à l'élément vitré 2.

Pour fixer le cordon profilé 6 à l'élément vitré 2, il est recommandé :
- de positionner la rainure 60 contre le chant 21,
- puis ajuster la position de cette rainure vis-à-vis de chant là où est le trou 66 en pressant manuellement la rainure 60 contre le chant 21 à cet endroit,
- puis faire adhérer le cordon profilé à l'élément vitré 2.

Cette adhésion peut être réalisée à l'aide d'une bande d'adhésion 8 formée par une couche de colle ou un ruban adhésif et notamment un ruban adhésif double face, qui est située sur la face extérieure de l'aile intérieure.

L'aile intérieure 65 présente une largeur l₆₅, illustrée en figure 3, comprise entre 5,0 et 20,0 mm, voire comprise entre 8,0 et 15,0 mm, notamment de 12 mm. Cette largeur est suffisante pour permettre un bon maintien de l'aile intérieure contre la feuille de verre intérieure.

Dans le mode de réalisation illustré en figure 3, la pièce de couverture 7 est destinée à être positionnée plus à l'extérieur que le cordon profilé 6 et à le couvrir en partie seulement lorsque le vitrage 1 est vu de l'extérieur E ; l'avaloir centripète 68 constitue une lèvre dont la face extérieure est à la fois dans la continuité (« flush ») de la face extérieure 20 de l'élément vitré et dans la continuité (« flush ») de la face extérieure de la pièce de couverture 7.

L'avaloir centripète 67 est situé moins à l'extérieur que l'avaloir centrifuge 68 afin que lorsque la pièce de couverture 7 est clippée dans la rainure 60 une face extérieure de la pièce de couverture 7 soit dans la continuité de la surface extérieure 30 de la feuille de verre extérieure 3 ; la pièce de couverture est « flush » avec la feuille de verre extérieure 3 par l'intermédiaire du cordon profilé 6 « flush » à la fois avec la face extérieure de l'élément vitré et avec la face extérieure de la pièce de couverture.

Sur la figure 3, le cordon profilé présente une hauteur hors tout h₆ d'environ 7,8 mm et la rainure 60 présente une hauteur h₆₀ d'environ 5,5 mm et une largeur l₆₀ d'environ 5,0 mm.

Le tenon 69 est plat dans l'espace situé sous la face intérieure 22 et se poursuit à l'intérieur de la matière constitutive de la rainure 60 dans la portion de cette rainure qui est à l'opposé de celle qui est contre le chant 21, afin de rigidifier encore plus l'aile intérieure 65.

Ce tenon 69 est traversé par le trou 66 qui traverse l'aile intérieure 65.

Dans le mode illustré en figure 4, la pièce de couverture 7 est destinée à être positionnée plus à l'extérieur que le cordon profilé 6 et à le couvrir complètement lorsque le vitrage 1 est vu de l'extérieur E. Il s'agit ici, dans le cadre de l'application à un bord bas d'un pare-brise, d'une pièce destinée à enjoliver le bord du vitrage et positionnée contre la feuillure 9 grâce à la présence d'une lèvre 75. Il peut s'agir d'un enjoliveur.

Dans ce second mode par ailleurs, les deux avaloirs sont situés plus à l'extérieur que la face extérieure 20 de l'élément vitré ; ils sont situés au-dessus de cette face extérieure 20 lorsque le prolongement de cette face au-delà du chant 31 est considéré.

L'aile intérieure 65 est une aile simple, réalisée dans le même matériau et venue de matière avec la rainure 60, sans renfort.

Un bord de la baie que le vitrage 1 doit fermer - en l'occurrence un bord inférieur - est illustré en figure 4 par une feuillure 9.

La figure 4 illustre par ailleurs une variante indépendante dans laquelle le harpon 70 comporte, vue en coupe transversale, une butée frontale 72 située en dehors de ladite rainure 60.

Cette butée frontale 72 est ici centrifuge et se trouve contre l'avaloir centrifuge 67 lors du clippage, mais elle pourrait être centripète et se trouver contre l'avaloir centripète 68 lors du clippage ; elle a pour but de limiter la pénétration du harpon 70 à l'intérieur de la rainure 60.

De préférence, comme visible sur la figure 4, le fond de la rainure 60 ne forme pas un U symétrique, mais un U asymétrique, avec un rayon de courbure plus grand du côté de la feuillure 9, qui permet de diminuer l'encombrement de la rainure vis-à-vis de la feuillure adjacente.

Plus particulièrement, l'utilisation d'une rainure à fond asymétrique avec un rayon de courbure plus grand du côté de la feuillure permet d'augmenter l'inclinaison de la feuillure dans sa partie adjacente au chant de l'élément vitré d'un angle de l'ordre de 20 ° et diminuer alors la distance entre la feuillure 9 et le fond centrifuge de la rainure, d'une valeur d'environ 9 mm à une valeur plus petite d'environ 4,5 mm. Cela représente un gain de place important et permet ainsi de rendre le système de clippage plus compact et d'augmenter la taille du vitrage.

Dans le premier et le second mode, une bande de masquage (non illustrée) située plus à l'extérieur que l'aile intérieure et d'une largeur de 20 mm en partant du chant de l'élément vitré peut permettre de masquer à la fois l'aile intérieure, avec le trou 66, et le cordon de colle (non illustré), plus centripète que l'aile intérieure, permettant la fixation du vitrage à la carrosserie.

## Revendications

1. Vitrage (1) de véhicule comprenant un élément vitré (2) présentant une face extérieure (20), un chant (21) et une face intérieure (22), ledit vitrage (1) comportant le long d'au moins une partie d'un bord bas un cordon profilé (6) comportant une rainure (60) pour le clippage d'une pièce de couverture (7) sur ledit cordon profilé (6), ladite pièce de couverture (7) comportant, vue en coupe transversale, un harpon (70) pénétrant dans ladite rainure (60) lors du clippage, ledit cordon profilé (6) étant situé contre ledit chant (21) dudit élément vitré (2), ledit cordon profilé (6) comportant, vu en coupe transversale, une aile intérieure (65) située en dessous de ladite face intérieure (22) dudit élément vitré (2), **caractérisé en ce que** ladite aile intérieure (65) comporte au moins dans une partie basse dudit cordon profilé (6), au moins un trou (66) traversant ladite aile intérieure (65), ledit trou (66) présentant de préférence une longueur comprise entre 2,0 et 50,0 mm et une largeur (l₆₆) comprise entre 2,0 et 10,0 mm, ledit trou (66) étant vide de matière solide et étant situé à l'aplomb de la rainure (60), en dehors de celle-ci, juste à la jonction entre l'aile intérieure (65) et la rainure (60).

2. Vitrage suivant la revendication 1, **caractérisé en ce que** ledit trou (66) présente une section rectangulaire avec une longueur comprise entre 10,0 et 20,0 mm et une largeur (l₆₆) comprise entre 2,0 et 6,0 mm.

3. Vitrage suivant la revendication 1 ou la revendication 2, **caractérisé en ce que** ledit vitrage (1) comporte une seule partie basse et un trou (66) unique centré en longueur sur un point le plus bas dudit cordon profilé (6).

4. Vitrage suivant la revendication 1 ou la revendication 2, **caractérisé en ce que** ledit vitrage (1) comporte deux parties basses et deux trous (66) centrés chacun en longueur sur un point le plus bas dudit cordon profilé (6).

5. Vitrage suivant l'une quelconque des revendications 1 à 4, **caractérisé en ce que** ladite aile intérieure (65) comporte un tenon (69) qui comporte lui-même un trou.

6. Vitrage suivant l'une quelconque des revendications 1 à 5, **caractérisé en ce que** ledit trou (66) dudit cordon profilé vu en coupe transversale est situé entre ladite rainure (60) et une bande d'adhésion (8) qui est située sur ladite aile intérieure (65).

7. Vitrage suivant l'une quelconque des revendications 1 à 6, **caractérisé en ce que**, vu en coupe transversale, ladite face extérieure (20) dudit élément vitré (2) est libre en vis-à-vis de ladite rainure (60), et ladite rainure est de préférence affleurante dans la continuité de ladite face extérieure (20).

8. Cordon profilé (6) pour un vitrage suivant l'une quelconque des revendications 1 à 7, **caractérisé en ce que** ladite aile intérieure (65) comporte au moins dans une partie basse dudit cordon profilé (6), au moins un trou (66) traversant ladite aile intérieure (65), ledit trou (66) présentant de préférence une longueur comprise entre 2,0 et 50,0 mm et une largeur (l₆₆) comprise entre 2,0 et 10,0 mm, ledit trou (66) étant vide de matière solide et étant situé à l'aplomb de la rainure (60), en dehors de celle-ci, juste à la jonction entre l'aile intérieure (65) et la rainure (60).

## Patentansprüche

1. Verglasung (1) für ein Fahrzeug, umfassend ein verglastes Element (2), das eine Außenseite (20), eine Kante (21) und eine Innenseite (22) aufweist, wobei die Verglasung (1) entlang mindestens eines Teils eines unteren Randes einen profilierten Wulst (6) umfasst, der eine Nut (60) zum Anklemmen eines Abdeckungsteils (7) auf dem profilierten Wulst (6) umfasst, wobei das Abdeckungsteil (7) im Querschnitt einen Fanghaken (70) umfasst, der beim Anklemmen in die Nut (60) eindringt, wobei der profilierte Wulst (6) an der Kante (21) des verglasten Elements (2) angeordnet ist, wobei der profilierte Wulst (6) im Querschnitt einen inneren Flügel (65) umfasst, der unter der Innenseite (22) des verglasten Elements (2) angeordnet ist, **dadurch gekennzeichnet, dass** der innere Flügel (65) mindestens in einem unteren Teil des profilierten Wulstes (6) mindestens ein Loch (66) umfasst, das den inneren Flügel (65) durchquert, wobei das Loch (66) bevorzugt eine Länge zwischen 2,0 und 50,0 mm und eine Breite (l₆₆) zwischen 2,0 und 10,0 mm aufweist, wobei das Loch (66) frei von Feststoff ist und in der Lotrechten zur Nut (60) außerhalb von dieser direkt am Übergang zwischen dem inneren Flügel (65) und der Nut (60) angeordnet ist.

2. Verglasung nach Anspruch 1, **dadurch gekennzeichnet, dass** das Loch (66) einen rechteckigen Querschnitt mit einer Länge zwischen 10,0 und 20,0 mm und einer Breite (l₆₆) zwischen 2,0 und 6,0 mm aufweist.

3. Verglasung nach Anspruch 1 oder Anspruch 2, **dadurch gekennzeichnet, dass** die Verglasung (1) einen einzigen unteren Teil und ein einziges Loch (66) umfasst, das in der Länge auf einen tiefsten Punkt des profilierten Wulstes (6) zentriert ist.

4. Verglasung nach Anspruch 1 oder Anspruch 2, **dadurch gekennzeichnet, dass** die Verglasung (1) zwei untere Teile und zwei Löcher (66) umfasst, die jeweils in der Länge auf einen tiefsten Punkt des profilierten Wulstes (6) zentriert sind.

5. Verglasung nach einem der Ansprüche 1 bis 4, **dadurch gekennzeichnet, dass** der innere Flügel (65) einen Zapfen (69) umfasst, der ebenfalls ein Loch umfasst.

6. Verglasung nach einem der Ansprüche 1 bis 5, **dadurch gekennzeichnet, dass** das Loch (66) des profilierten Wulstes im Querschnitt betrachtet zwischen der Nut (60) und einem Klebeband (8) angeordnet ist, das auf dem inneren Flügel (65) angeordnet ist.

7. Verglasung nach einem der Ansprüche 1 bis 6, **dadurch gekennzeichnet, dass** die Außenseite (20) des verglasten Elements (2) im Querschnitt betrachtet gegenüber der Nut (60) frei ist und dass die Nut bevorzugt in der Fortsetzung der Außenseite (20) bündig ist.

8. Profilierter Wulst (6) für eine Verglasung nach einem der Ansprüche 1 bis 7, **dadurch gekennzeichnet, dass** der innere Flügel (65) mindestens in einem unteren Teil des profilierten Wulstes (6) mindestens ein Loch (66) umfasst, das den inneren Flügel (65) durchquert, wobei das Loch (66) bevorzugt eine Länge zwischen 2,0 und 50,0 mm und eine Breite (l₆₆) zwischen 2,0 und 10,0 mm aufweist, wobei das Loch (66) frei von Feststoff ist und in der Lotrechten zur Nut (60) außerhalb von dieser direkt am Übergang zwischen dem inneren Flügel (65) und der Nut (60) angeordnet ist.

## Claims

1. A vehicle glazing unit (1) comprising a glazed element (2) having an outer face (20), an edge face (21) and an inner face (22), said glazing unit (1) comprising, along at least a part of a bottom edge, a profiled bead (6) comprising a groove (60) for clip-fastening a covering piece (7) on said profiled bead (6), said covering piece (7) comprising, as seen in cross section, a barbed hook (70) that passes into said groove (60) during clip-fastening, said profiled bead (6) being situated against said edge face (21) of said glazed element (2), said profiled bead (6) comprising, as seen in cross section, an inner leg (65) situated beneath said inner face (22) of said glazed element (2), **characterized in that** said inner leg (65) comprises, at least in a bottom part of said profiled bead (6), at least one hole (66) passing through said inner leg (65), said hole (66) preferably having a length of between 2.0 and 50.0 mm and a width (l₆₆) of between 2.0 and 10.0 mm, said hole (66) being void of solid material and being situated in plumb with the groove (60), outside the latter, just at the junction between the inner leg (65) and the groove (60).

2. The glazing unit as claimed in claim 1, **characterized in that** said hole (66) has a rectangular section with a length of between 10.0 and 20.0 mm and a width (l₆₆) of between 2.0 and 6.0 mm.

3. The glazing unit as claimed in claim 1 or claim 2, **characterized in that** said glazing unit (1) comprises a single bottom part and a single hole (66) centered lengthwise on a bottommost point of said profiled bead (6).

4. The glazing unit as claimed in claim 1 or claim 2, **characterized in that** said glazing unit (1) comprises two bottom parts and two holes (66) each centered lengthwise on a bottommost point of said profiled bead (6).

5. The glazing unit as claimed in any one of claims 1 to 4, **characterized in that** said inner leg (65) comprises a lug (69) which itself comprises a hole.

6. The glazing unit as claimed in any one of claims 1 to 5, **characterized in that** said hole (66) in said profiled bead, as seen in cross section, is situated between said groove (60) and an adhesive strip (8) which is situated on said inner leg (65).

7. The glazing unit as claimed in any one of claims 1 to 6, **characterized in that**, as seen in cross section, said outer face (20) of said glazed element (2) is free with respect to said groove (60), and said groove is preferably flush with said outer face (20).

8. A profiled bead (6) for a glazing unit as claimed in any one of claims 1 to 7, **characterized in that** said inner leg (65) comprises, at least in a bottom part of said profiled bead (6), at least one hole (66) passing through said inner leg (65), said hole (66) preferably having a length of between 2.0 and 50.0 mm and a width (l₆₆) of between 2.0 and 10.0 mm, said hole (66) being void of solid material and being situated in plumb with the groove (60), outside the latter, just at the junction between the inner leg (65) and the groove (60).
